# EUROPEAN PATENT SPECIFICATION

(11) **EP 0 435 622 B1**
(45) Date of publication and mention of the grant of the patent: **21.09.1994**
(21) Application number: 90314174.5
(22) Date of filing: 21.12.1990
(51) Int. Cl.: B60C 15/06

(54) **High speed tyre for heavy duty vehicles**
Hochgeschwindigkeitsreifen für Schwerlastfahrzeuge
Pneumatique à grande vitesse pour poids lourds

(30) Priority: 28.12.1989 JP 344638/89
(43) Date of publication of application: 03.07.1991
(73) Proprietor: SUMITOMO RUBBER INDUSTRIES LIMITED, Kobe-shi Hyogo-ken (JP)
(72) Inventor: Ueyoko, Kiyoshi, Osaka-shi, Osaka-fu (JP); Hoshino, Hiroshi, Kobe-shi, Hyogo-ken (JP)
(74) Representative: Stewart, Charles Geoffrey

(56) References cited:
- EP-A- 0 251 145
- EP-A- 0 323 208
- US-A- 4 046 183
- US-A- 4 790 364

## Description

The present invention relates to a high speed tyre for heavy duty vehicles particularly suitable for aircraft.

Recently, tyres used in heavy duty and high speed conditions such as aircraft tyres, have become of radial construction for structural durability, running performance and low fuel consumption. For such aircraft tyres, however, since they are used in conditions of high internal pressure, heavy load and high speed, a greater durability is required compared to tyres used in other fields. Especially the bead part is likely to be peeled apart or damaged in the carcass edge regions and its vicinity due to the strain caused by bending deformation by large loads at the times of taking off and landing. Therefore, it was hitherto attempted to suppress bending deformation by increasing the bead volume or by enhancing the bead rigidity with reinforcement layers made of organic or inorganic fibre cords.

By such rigidity reinforcing measures, however, the internal heat generation due to bending deformation could not be decreased, and satisfactory preventive effects of bead part damages were not obtained.

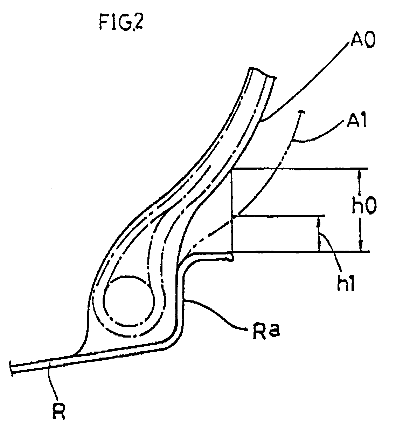

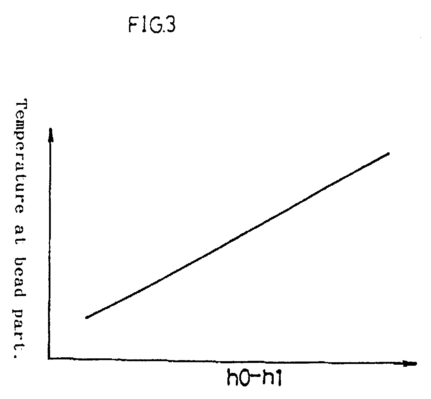

The present inventors accordingly studied the bending deformation of the bead by carrying out take-off taxi simulation tests and other similar tests conforming to the Federal Aviation Administration Technical Standard Order TSO-C62c. As a result, comparing the tyre bead part AO without load and the tyre bead part A1 with specified load as shown in Figure 2, mounted on its specified rim R and inflated to its specified internal pressure, it was found that the internal heat generation of the bead part is lower when the bead deformation h0-h1 is smaller where h0-h1 is the difference between the initial height h0 and the loaded height h1, i.e. the length between the outer surface of the bead parts A0 and A1 on the vertical line set up from the outer edge of the rim flange Ra, and the upper edge of the rim flange Ra as shown in Figure 3. The inventors know that the heat generation of the bead part is somewhat increased when the rigidity is increased by increasing the thickness of the bead parts, especially the clinch thickness which is the thickness in the flexural part, in order to decrease the bead deformation h0-h1.

The present inventors carried out further research and discovered that if the loaded height h1 is increased to decrease the bead deformation h0-h1, without practically changing the initial height h0, by employing high modulus rubber as a bead apex, and that the shearing stress occurring in the bead part in the loaded state can be lessened to enhance the bead durability by decreasing the modulus from the inside to the outside in the direction of the tyre axis.

A known tyre according to the preamble of claim 1 is shown, e.g. in EP-A-0 323 208.

It is a primary object of the invention to provide a high speed tyre for heavy duty vehicles in which there is a decrease in bead bending deformation and bead heat generation so as to suppress bead damage.

According to the present invention a high speed tyre for heavy duty vehicles comprises a radial carcass having a main body part extending from a tread through sidewalls to a bead core in each of two beads and folded-back parts each being folded back around the bead core at each edge of the main body, a belt layer disposed radially outside the carcass, tapered rubber bead apices each extending outwardly in the radial direction between the main body and the folded-back part from the bead core, rubber side packings of small thickness each disposed along the outside surface, in the tyre axial direction, of the carcass, and rubber sidewalls each covering the rubber side packing and extending from the bead to the sidewall so as to form the outside surface of the tyre wherein the 100% modulus MP of the rubber side packing is 53 to 95 kg/cm², the 100% modulus MA of the bead apex is 78 to 120 kg/cm², the 100% modulus MS of the sidewall is 14 to 50 kg/cm², and these 100% modulus values MP, MA, MS are in the relation of MS < MP < MA.

Preferably, the height HP of the side packing rubber in the radial direction from the bead bottom line to the upper end thereof is greater than the height HA of the bead apex rubber from the bead bottom line to the upper end thereof and smaller than 1/2 of the tyre sectional height H, and the height HA of the bead apex rubber is greater than the rim flange height HR from the bead bottom line to the upper end thereof.

For the bead apex rubber, a high hardness rubber with a modulus at 100% stretch (hereinafter called 100% modulus) of 78 to 120 kg/cm² is specified. As a result, the rigidity of the bead part is increased, and the bead deformation h0-h1 is decreased. Further, for the sidewall rubber, a soft rubber with the 100% modulus of 14 to 50 kg/cm² is specified, and a side packing rubber with a 100% modulus of 53 to 95 kg/cm² is provided between them. The 100% modulus of the side packing rubber is smaller than that of the bead apex rubber and larger than that of the sidewall rubber, so that the shearing stress is decreased so as to enhance the bead part durability while still enhancing the rigidity. In this way, bead damage may be suppressed by the synergistic action of the reducing effect of the bending stress and decreased deformation generated heat by a decrease of bead deformation, and alleviating the effect of shearing stress.

An embodiment will now be disclosed, by way of example only, in conjunction with the attached drawings, in which:
Figure 1 is a sectional view showing an embodiment of the invention;
Figure 2 is a schematic diagram showing the bending deformation state of the bead; and
Figure 3 is a diagram showing the relation between the bead outer surface heights h0, h1 and the resultant bead temperature.

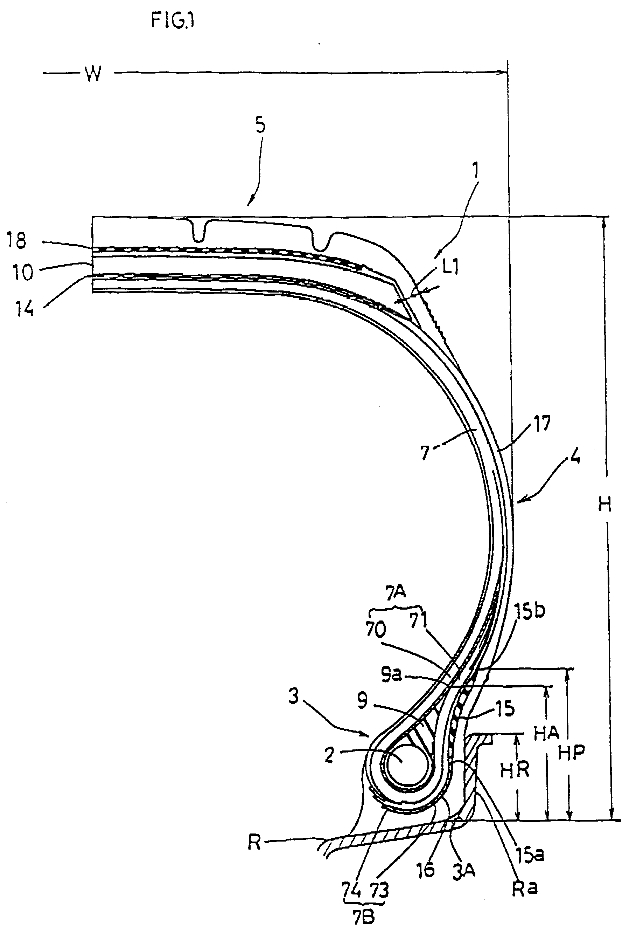

Figure 1 is a 46 x 17R20 radial aircraft tyre 1 which is mounted on its specified rim R and inflated to its specified internal pressure. The tyre 1 comprises a bead 3 with an annular bead core 2 through it, a sidewall 4 consecutive to the bead 3 and extending outwardly in the tyre radial direction, to a tread 5 which links between the outer ends of the two sidewalls 4.

In addition, the tyre 1 also has a carcass 7 consisting of an inner layer 7A composed of plural, for example, four inner plies folded around the bead core 2 from the inside to the outside of the tyre, and an outer layer 7B composed of plural, for example, two outer plies enclosing the folded-back portion of the inner layer 7A from the outside to the inside of the tyre.

The inner layer 7A has a folded-back part 71 at both edges of a toroidal main body part 70 passing through the tread 5 and sidewalls 4. The outer layer 7B has a turned up part 74 enclosing the folded-back part 71 at both edges of a toroidal main body part 73.

The inner plies and outer plies comprise carcass cords of organic fibre cords, and the carcass cords are arranged in the radial direction having an inclination of 70 to 90 degrees to the tyre's equator. The carcass 7 has the carcass cords of adjacent plies crossed and inclined alternately in the circumferential direction. For the organic fibre cords rayon, polyester, vinylon, nylon, aromatic polyamide or the like may be used.

In addition, between the main body part 70 and the folded part 71 of the inner layer 7A of the carcass 7, there is a rubber bead apex 9 extending outwardly in the radial direction from the bead core 2. Further, a rubber side packing 15 with a small thickness, extending inwardly and outwardly in the radial direction along the outer surface of the main body part 73 of the carcass 7, is provided in the bead 3. The lower end 15a of the rubber side packing 15 is terminated on the side of the bead core 2 at the upper end of a reinforcement filler 16 which extends on the bottom surface of the wrapping part 74. Also the rubber side packing 15 is covered by a rubber sidewall 17 which forms the outer side surface of the tyre from the bead 3 to the sidewall 4.

The tread 5 has a belt layer 10 positioned outside in the radial direction of the carcass 7 and in its inside, and a cut breaker 14 is positioned between the belt layer 10 and the carcass 7.

The belt layer 10 is composed of plural, for example, eight belt plies.

The cut breaker 14 is composed of, for example, two cut breaker plies. This cut breaker 14 runs along the carcass 7 in the middle part of the tread across the tyre's equator, and is gradually spaced from the carcass 7 in its outward direction, and its outer edges terminate at a position of about 65 to 85% of the tyre maximum width W, preferably at a position in the range of 70 to 78%.

The belt layer 10 further is superimposed on the cut breaker 14, and its outer edge extends outwardly over the outer edge of the cut breaker 14. The outer edge is also aligned to the slope along the tyre outer surface. The belt width is in a range of 70 to 85% of the tyre maximum width W, and the shortest distance L1 from the belt outer end to the tyre outer surface is set in a range of 3 to 15mm.

The belt cords forming the belt plies are made of elastic cords of low stretchability, and the parallel belt cords are disposed at an inclination of 0 to 20 degrees to the tyre's equator.

The outer surface of the belt layer 10 is coated with a protective layer 18 to enhance the cutting resistance.

In this invention the 100% modulus MP of the rubber side packing is set to be 53 to 95 kg/cm², the 100% modulus MA of the rubber bead apex is set to be 78 to 120 kg/cm², and the 100% modulus MS of the rubber sidewall is set to be 14 to 50 kg/cm².

What is more, these moduli MP, MA,MS are set to be interrelated by the relation MS < MP <MA.

These 100% modulus of the rubber bead apex 9, rubber side packing 15 and rubber sidewall 17 are summarised in Table 1, together with the elongation upon rupture (%), the stress upon rupture (kg/cm²), and numerical values of the topping rubbers of the carcass 7.

Thus, the high hardness rubber with 100% modulus of 78 to 120 kg/cm² is used as the rubber bead apex 9. As a result, the rigidity of the bead is raised, and bead deformation h0-h1 is decreased. Furthermore, for the rubber sidewall 17, relatively soft rubber with 100% modulus of 14 to 50 kg/cm² is used, and the rubber side packing 15 with 100% modulus of 53 to 95 kg/cm², being smaller than that of the rubber bead apex 9 and greater than that of the rubber sidewall 17 is provided between them. Thereby, the step difference of rigidity is decreased while further raising the rigidity. Shearing stress is alleviated and the bead durability is enhanced. In this way bead damage may be dramatically suppressed by the synergistic actions of the decreased bending stress and heat generation due to deformation by decreasing the said bead deformation and alleviating effects of shearing stress.

Furthermore, the rubber side packing 15 has the height HP of its upper edge 5b from the bead bottom line 3A in the radial direction set greater than the height HA of the upper edge 9a of the rubber bead apex 9 from the bead bottom line 3A, and smaller than 1/2 of the tyre sectional height H. Also the height HA of the upper end 9a of the bead apex rubber 9 is greater than the rim flange height HR from the bead bottom line 3A to the upper edge thereof.

To increase the bending rigidity of the bead, it is required that the height HA of the upper end 9a of the rubber bead apex 9 is greater than the height HR of the rim flange Ra, and by setting the height HP of the upper edge 15b of the rubber side packing 15 greater than this height HR, the bending rigidity in the bead is effectively raised. It is, meanwhile, not necessary to set this height HP greater than 1/2 of the tyre section height H.

Aircraft tyres having the tyre structure as shown in Figure 1 and a tyre size of 46 x 17R20 were manufactured, together with comparative examples, varying the 100% modulus of the bead apex rubber, the side packing rubber, and the sidewall rubber as shown in Table 2. The trial tyres were subjected to the taxi simulation condition test (load 100%) to measure the repeated bead durability in accordance with the Federal Aviation Administration Technical Standard Order TSO-C62c. The results are shown in Table 2 by an index taking the embodiment as 100. The greater the index, the better. The embodiments are seen to be excellent in bead durability. As compared with the tyre of reference 2, the embodiment was lower in bead temperature by about 5°C under the same conditions, and the bead deformation was decreased by 1 to 1.5%.

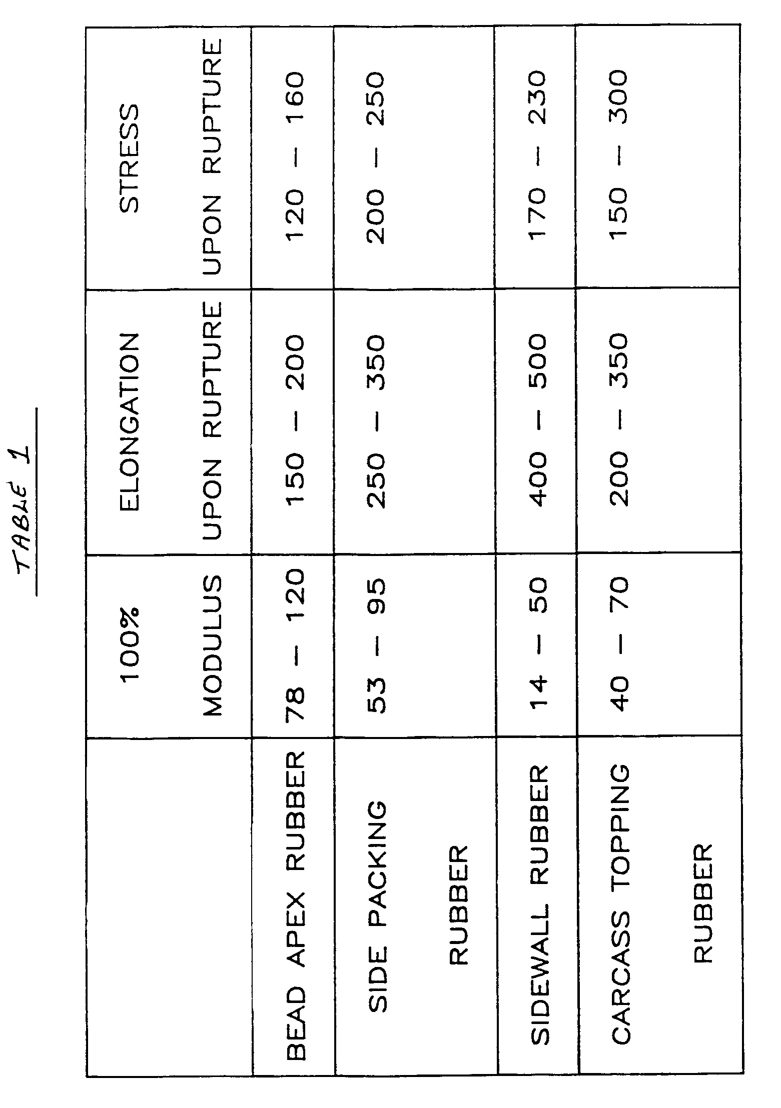

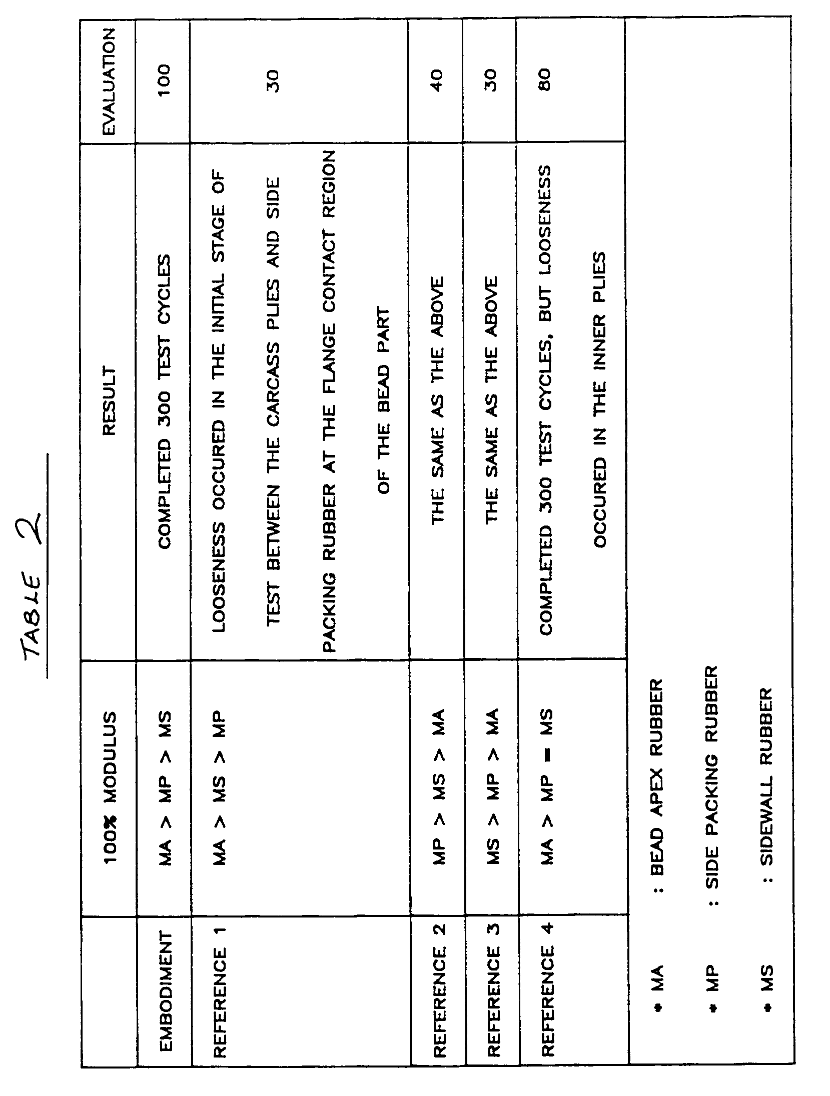

## Claims

1. A high speed tyre for heavy duty vehicles comprises a radial carcass (7) having a main body part (7a) extending from a tread (5) through sidewalls (4) to a bead core (2) in each of two beads (3) and folded-back parts (71) each being folded back around the bead core (2) at each edge of the main body (70), a belt layer (10) disposed radially outside the carcass (7), tapered rubber bead apices (9) each extending outwardly in the radial direction between the main body (70) and the folded-back part (71) from the bead core (2), rubber side packings (15) of small thickness each disposed along the outside surface, in the tyre axial direction, of the carcass (7), and rubber sidewalls (17) each covering the rubber side packing (15) and extending from the bead (3) to the sidewall (4) so as to form the outside surface of the tyre characterised in that the 100% modulus MP of the rubber side packing (15) is 53 to 95 kg/cm², the 100% modulus MA of the bead apex (9) is 78 to 120 kg/cm², the 100% modulus MS of the sidewall (17) is 14 to 50 kg/cm², and these 100% modulus values MP, MA, MS are in the relation of MS < MP < MA.

2. A high speed tyre according to claim 1 characterised in that the height HP of the rubber side packing (15) in the radial direction from the bead bottom line (3A) to the upper edge (15b) thereof is greater than the height HA of the bead apex (9) from the bead bottom line (3A) to the upper edge (9a) thereof and less than 1/2 of the tyre sectional height H, and the height HA of the bead apex (9) is greater than the rim flange height HR from the bead bottom line (3A) to the upper edge thereof.

## Patentansprüche

1. Hochgeschwindigkeitsreifen für Schwerlastfahrzeuge, der umfaßt eine radiale Karkasse (7) mit einem Hauptkörperteil (7a), das sich von einer Lauffläche (5) durch Seitenwände (4) zu einem Wulstkern (2) in jedem der beiden Wülste (3) erstreckt, und zurückgefaltete Teile (71), von denen jedes an jedem Rand des Hauptkörpers (70) um den Wulstkern (2) zurückgefaltete ist, eine Gürtelschicht (10), die radial außerhalb der Karkasse (7) angeordnet ist, sich verjüngende Gummiwulstreiter (9), von denen sich jeder in der Radialrichtung zwischen dem Hauptkörper (70) und dem zurückgefalteten Teil (71) von dem Wulstkern (2) nach außen erstreckt, Gummiseitenpackungen (15) von geringer Dicke, von denen jede entlang der äußeren Oberfläche der Karkasse (7) in der Axialrichtung des Reifens angeordnet ist, und Gummiseitenwände (17), von denen jede die Gummiseitenpackung (15) bedeckt und die sich von dem Wulst (3) zu der Seitenwand (4) erstrecken, um die äußere Oberfläche des Reifens zu bilden, dadurch gekennzeichnet, daß der 100 % Modul MP der Gummiseitenpackung (15) 53 bis 95 kg/cm² beträgt, der 100 % Modul MA des Wulstreiters (9) 78 bis 120 kg/cm² beträgt, der 100 % Modul MS der Seitenwand (17) 14 bis 50 kg/cm², und diese 100 % Modulnwerte MP, MA, MS zueinander in der Beziehung MS < MP < MA stehen.

2. Hochgeschwindigkeitsreifen nach Anspruch 1, dadurch gekennzeichnet, daß die Höhe HP der Gummiseitenpackung (15) in der Radialrichtung von der Wulstbodenlinie (3A) zu dem oberen Rand (15b) davon größer ist als die Höhe HA des Wulstreiters (9) von der Wulstbodenlinie (3A) zu dem oberen Rand (9a) davon und geringer als 1/2 der Schnitthöhe H des Reifens ist, und die Höhe HA des Wulstreiters (9) größer ist als die Höhe des Felgenflansches HR von der Wulstbodenlinie (3A) zu dem oberen Rand davon.

## Revendications

1. Pneumatique pour vitesses élevées destiné à des véhicules supportant de lourdes charges, comprenant une carcasse radiale (7) ayant une partie principale de corps (7a) partant d'une bande de roulement (5), passant dans des flancs (4) et rejoignant une tringle (2) dans chacun de deux talons (3), et des parties (71) repliées chacune autour de la tringle (2) à chaque bord du corps principal (70), une couche (10) de ceinture placée radialement à l'extérieur de la carcasse (7), des pointes de bourrage de talon (9) formées de caoutchouc et ayant une dimension qui diminue progressivement, disposées chacune vers l'extérieur dans la direction radiale entre le corps principal (70) et la partie repliée (71) depuis la tringle (2), des remplissages latéraux (15) de caoutchouc ayant une faible épaisseur et disposés chacun le long de la surface externe de la carcasse (7), dans la direction axiale du pneumatique, et des flancs (17) de caoutchouc recouvrant chacun le remplissage latéral de caoutchouc (15) et disposés du talon (3) au flanc (4) pour la formation de la surface externe du pneumatique, caractérisé en ce que le module à 100 % MP du caoutchouc du remplissage latéral (15) est compris entre 5,3.10⁶ et 9,5.10⁶ Pa (53 à 95 kg/cm²), le module à 100 % MA de la pointe (9) de bourrage de talon est compris entre 7,8.10⁶ et 12,0.10⁶ Pa (78 à 120 kg/cm²), le module à 100 % MS du flanc (17) est compris entre 1,4.10⁶ et 5,0.10⁶Pa (14 à 50 kg/cm²), et ces valeurs des modules à 100 % MP, MA, MS correspondent à la relation MS < MP < MA.

2. Pneumatique pour vitesses élevées selon la revendication 1, caractérisé en ce que la hauteur HP de caoutchouc de remplissage latéral (15) dans la direction radiale depuis l'axe inférieur (3A) des talons jusqu'au bord supérieur (15b) est supérieure à la hauteur HA de la pointe de bourrage de talon (9) depuis la droite inférieure (3A) des talons jusqu'à son bord supérieur (9a) et est inférieure à la moitié de la hauteur H en coupe du pneumatique, et la hauteur HA de la pointe de bourrage de talon (9) est supérieure à la hauteur HR du flasque de la jante de la droite inférieure (3A) des talons jusqu'à son bord supérieur.
